# EUROPÄISCHE PATENTSCHRIFT

(11) **EP 0 689 651 B1**
(45) Veröffentlichungstag und Bekanntmachung des Hinweises auf die Patenterteilung: **22.01.1997**
(21) Anmeldenummer: 94909899.0
(22) Anmeldetag: 01.03.1994
(51) Int. Cl.: F16K 11/078

(54) **SANITÄRES MISCHVENTIL**
SANITARY MIXER TAP
MITIGEUR SANITAIRE

(30) Priorität: 20.03.1993 DE 4308994
(43) Veröffentlichungstag der Anmeldung: 03.01.1996
(73) Patentinhaber: HANSA METALLWERKE AG, D-70567 Stuttgart (DE)
(72) Erfinder: OBERDÖRFER, Hans, D-70567 Stuttgart (DE)
(74) Vertreter: Ostertag, Ulrich
(86) Internationale Anmeldenummer: EP9400588
(87) Internationale Veröffentlichungsnummer: WO9421948

(56) Entgegenhaltungen:
- DE-A- 3 310 080
- FR-A- 2 623 269
- GB-A- 2 192 256

## Beschreibung

Die Erfindung betrifft ein sanitäres Mischventil mit
a) einer feststehenden Steuerscheibe, welche eine erste mit einem Kaltwasser-Zulauf kommunizierende Durchtrittsöffnung und symmetrisch zu einer Mittelebene eine zweite mit einem Warmwasser-Zulauf kommunizierende Durchtrittsöffnung aufweist;
b) einer zweiten, auf der feststehenden Steuerscheibe aufliegenden beweglichen Steuerscheibe, welche gegenüber der feststehenden Steuerscheibe zur Veränderung der Menge des auslaufenden Wassers linear verschiebbar und zur Veränderung der Temperatur verdrehbar ist und hierzu eine Ausnehmung aufweist, welche in Verbindung mit einem Auslauf steht und in unterschiedliche Überlappung mit dem beiden Durchtrittsöffnungen der feststehenden Steuerscheibe gebracht werden kann,
wobei
c) an der in Öffnungsrichtung vorauseilenden Begrenzungslinie der Ausnehmung der beweglichen Steuerscheibe eine Steuerkante ausgebildet ist, die so geformt ist, daß die bewegliche Steuerscheibe in ihrer mittleren Drehstellung beim Öffnen die beiden Durchtrittsöffnungen der feststehenden Steuerscheibe in unterschiedlicher Weise freigibt.

Zu den am weitesten verbreiteten sanitären Mischventilen zählen sogenannte Einhebelmischer, wie sie insbesondere auch an Waschtischen eingesetzt werden. In ihnen wird der Kaltwasser- und der Warmwasserweg im allgemeinen symmetrisch behandelt. Dies heißt insbesondere, daß beim Öffnen des Ventils in der mittleren Drehstellung der beweglichen Steuerscheibe Kalt- und Warmwasser in gleicher Weise zum Durchfluß freigegeben wird. Die mittlere Drehstellung der beweglichen Steuerscheibe ist diejenigen, die im allgemeinen bei der Schließstellung eingenommen wird. Dies geschieht bei Einhebelmischern häufig schon unbewußt durch den Benutzer, da er aus Ordnungssinn sucht, den Bedienungshebel mit dem Auslauf dieser Armatur fluchten zu lassen. Viele Konstruktionen sehen darüber hinaus vor, daß das sanitäre Mischventil nur in dieser mittleren Drehstellung geschlossen werden kann, daß also die bewegliche Steuerscheibe beim Schließen der Armatur automatisch in die mittlere Drehstellung zurückkehrt. Wird nun ein derartiges, in der mittleren Drehstellung der beweglichen Steuerscheibe geschlossenes Sanitärventil geöffnet, so fließt grundsätzlich zunächst sowohl Kalt- und Warmwasser, auch wenn dies der Benutzer für den von ihm ins Auge gefaßten Zweck, z.B. zum Händewaschen, eigentlich weder benötigen noch Wünschen würde. Eine Korrektur der auslaufenden Wassertemperatur in Richtung auf Kalt erfolgt aber aus Bequemlichkeitsgründen im allgemeinen nicht. Auf diese Weise wird viel Energie verschwendet.

Ein sanitäres Mischventil der eingangs genannten Art ist in der DE-PS 33 10 080 beschrieben. Hier wird für einen ganz bestimmten Einsatzzweck auf die symmetrische Behandlung von Kalt- und Warmwasserfluß verzichtet. Diese bekannte Armatur ist zur Verwendung mit Durchlauferhitzern bestimmt, bei denen zur Vermeidung von häufigen Ein- und Ausschaltvorgängen möglichst für einen Mindestdurchsatz an Warmwasser gesorgt werden sollte. Aus diesem Grunde weist die Steuerkante an der Ausnehmung der beweglichen Steuerscheibe bei diesem Ventil eine Konturierung auf, durch welche vorzugsweise der Warmwasserbereich weit aufgemacht wird, also vorzugsweise Warmwasser fließt, und kälteres Wasser dann durch Zumischen von Kaltwasser erzeugt wird. Diese Konturierung der Steuerkante des bekannten Ventiles hat also ihre Ursache ausschließlich in dem speziellen Einsatzzweck bei einem Durchlauferhitzer und führt im Grunde zu energetisch unerwünschten Verhältnissen.

Aufgabe der vorliegenden Erfindung ist es, ein sanitäres Mischventil der eingangs genannten Art derart auszugestalten, daß ein unnötiger Warmwasserfluß und damit unnötige Energieverluste vermieden werden.

Diese Aufgabe wird erfindungsgemäß dadurch gelöst, daß
d) die Steuerkante an der Ausnehmung der beweglichen Steuerscheibe so geformt ist, daß beim Öffnen des Ventils in der mittleren Drehstellung der beweglichen Steuerscheibe zunächst ausschließlich die mit dem Kaltwasser-Zulauf kommunizierende Durchtrittsöffnung der feststehenden Steuerscheibe und erst bei fortschreitender linearer Verschiebung der beweglichen Steuerscheibe auch die mit dem Warmwasser-Zulauf kommunizierende Durchtrittsöffnung der feststehenden Steuerscheibe freigegeben wird.

Die Erfindung macht sich also für ihre Zwecke die bereits oben angedeutete Erkenntnis zunutze, daß beim Schließen des Mischventiles die bewegliche Steuerscheibe im allgemeinen in ihre mittlere Drehlage zurückgebracht wird. Durch die spezielle Konturierung der Steuerkante an der beweglichen Steuerscheibe wird erreicht, daß dem Benutzer beim Öffnen des Ventiles zunächst ausschließlich Kaltwasser angeboten wird. In vielen Fällen wird der Benutzer damit zufrieden sein, ohne daß ihm dies speziell bewußt wird. Nur in denjenigen Fällen, in denen der Benutzer das Kaltwasser als unzureichend oder unangenehm empfindet, wird er speziell die bewegliche Steuerscheibe in derjenigen Richtung verdrehen, welche einer Erhöhung der Temperatur des auslaufenden Mischwassers entspricht. Auf diese Drehbewegung antwortet auch die erfindungsgemäße Armatur mit der gewünschten Mischwasser-Temperaturerhöhung. Die Erfindung macht sich also in gewissem Sinne die "Bequemlichkeit" der Bedienungsperson zunutze: Während bei bekannten sanitären Mischventilen diese Bequemlichkeit zu unnötigem Warmwasserfluß führte, fließt bei der vorliegenden Erfindung Warmwasser nur dann, wenn dies wirklich gewollt ist. Hierdurch lassen sich erhebliche Energieeinsparungen erzielen, insbesondere dort, wo das sanitäre Mischventil im öffentlichen Bereich eingesetzt wird.

Besonders zweckmäßig ist die Ausgestaltung, bei welcher die Steuerkante in zwei Bereiche unterteilt ist, die über eine Stufe miteinander verbunden sind. Die Stufe verläuft dabei parallel zu derjenigen Richtung, in welcher die bewegliche Steuerscheibe beim Öffnen des Ventils in ihrer mittleren Drehstellung verschoben wird. Es entstehen so ein vorauseilender Bereich der Steuerkante und ein nacheilender Bereich, wobei der vorauseilende Bereich der Kaltwasser-Durchtrittsöffnung und der nacheilende Bereich der Warmwasser-Durchtrittsöffnung der feststehenden Steuerscheibe zugeordnet ist.

In sehr vielen Fällen sind sanitäre Mischventile der eingangs genannten Art so ausgebildet, daß die Durchtrittsöffnungen der feststehenden Steuerscheibe Kreisringsegmente sind. In diesen Fällen sieht eine besondere Ausführungsform der Erfindung vor, daß die beiden Bereiche der Steuerkante als Kreisbögen ausgestaltet sind, deren Radius mit dem Radius der radial inneren Begrenzungslinie der Durchtrittsöffnung der feststehenden Steuerscheibe übereinstimmt. Diese Maßnahme stellt sicher, daß zumindest bei mittlerer Drehstellung der beweglichen Steuerscheibe die Menge des ausfließenden Wassers der linearen Verschiebung der beweglichen Steuerscheibe proportional folgt.

Vorzugsweise fluchtet die Stufe in der mittleren Drehstellung der beweglichen Steuerscheibe mit der Mittelebene der feststehenden Steuerscheibe. Dann verhält sich die bewegliche Steuerscheibe des erfindungsgemäßen Ventiles so, als ob sie in derjenigen Hälfte, die der Kaltwasser-Durchtrittsöffnung der feststehenden Steuerscheibe zugeordnet ist, schon etwas weiter geöffnet wäre als diejenige Hälfte, welche der Warmwasser-Durchtrittsöffnung der feststehenden Steuerscheibe entspricht.

Wenn die Höhe der Stufe gleich der Breite der Durchtrittsöffnungen der beweglichen Steuerscheibe ist, wird beim Öffnen des Sanitärventiles in der mittleren Drehstellung der beweglichen Steuerscheibe zunächst der Kaltwasserstrom bis zur vollen Stärke eröffnet, bevor dann beim weiteren Öffnen auch ein Warmwasserfluß freigegeben wird.

Ein Ausführungsbeispiel der Erfindung wird nachfolgend anhand der Zeichnung näher erläutert; es zeigen
- Figur 1:: die Draufsicht auf die bewegliche Steuerscheibe eines sanitären Mischventiles;
- Figur 2:: die Draufsicht auf die zu der beweglichen Steuerscheibe von Figur 1 gehörende feststehende Steuerscheibe des sanitären Mischventils;
- Figur 3:: die Steuerscheiben der Figuren 1 und 2, übereinanderliegend, in der Schließstellung des sanitären Mischventils;
- Figur 4:: eine Ansicht, ähnlich der Figur 3, jedoch bei beginnender Öffnung des sanitären Mischventiles in einer mittleren Drehstellung der beweglichen Steuerscheibe;
- Figur 5:: eine Ansicht, ähnlich der Figur 4, jedoch bei vollständiger Öffnung des sanitären Mischventiles und bei mittlerer Drehstellung der beweglichen Steuerscheibe.

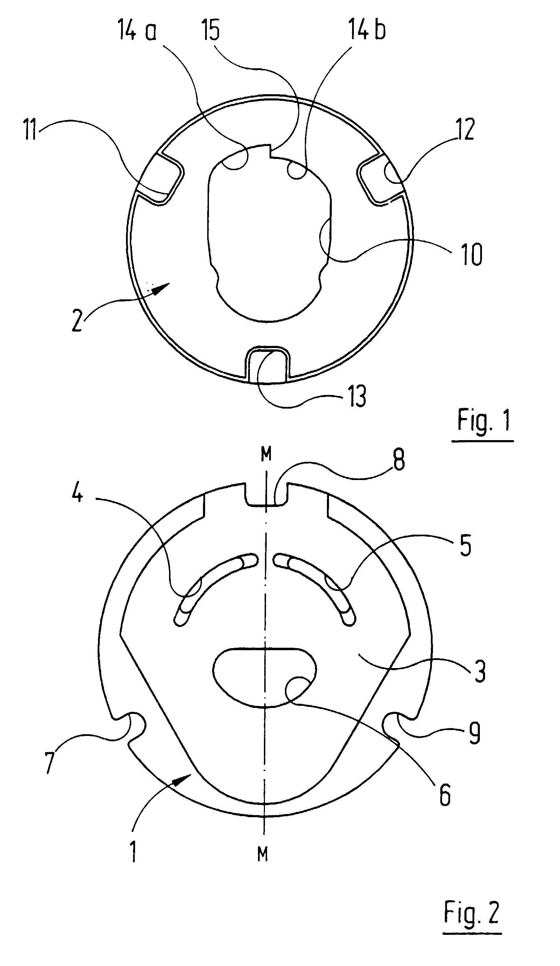

In der Zeichnung sind nur die Hauptkomponenten des sanitären Mischventiles, nämlich eine feststehende Steuerscheibe 1 (Figur 2) und eine bewegliche Steuerscheibe 2 (Figur 1) dargestellt. Im allgemeinen werden diese Hauptkomponenten in einem Kartuschengehäuse zusammengefaßt, das diejenigen Konstruktionselemente enthält, welche die feststehende Steuerscheibe 1 unbeweglich, das heißt, weder verdrehbar noch verschiebbar, fixieren, und welche die bewegliche Steuerscheibe 2 in einer Weise haltern, daß sie auf der feststehenden Steuerscheibe 1 sowohl linear verschiebbar als auch verdrehbar ist. Die Bauweisen derartiger Kartuschen sind an und für sich bekannt, so daß sie hier nicht näher erläutert zu werden brauchen.

Die in Figur 2 dargestellte feststehende Steuerscheibe 1 ist grundsätzlich in der dargestellten Weise bekannt. Sie besteht im allgemeinen aus Keramik oder einem ähnlichen, sehr harten Material und ist in einem in Figur 2 nach oben weisenden Bereich 3 auf hohe Güte poliert. Der Bereich 3 erfüllt im Mischventil die Funktion eines Ventilsitzes.

Die feststehende Steuerscheibe 1 weist symmetrisch zu einer Mittelebene M-M zwei Durchtrittsöffnungen 4, 5 auf, die beide die Form eines Kreisringsegmentes haben. Der gemeinsame Mittelpunkt der Kreisringsegmente liegt auf der Drehachse, um welche die bewegliche Steuerscheibe 2 von Figur 1 verdreht werden kann. Im dargestellten Ausführungsbeispiel ist diese Drehachse identisch mit dem Mittelpunkt der feststehenden Steuerscheibe 1. Beide Durchtrittsöffnungen 4, 5 sind trichterförmig gestaltet, das heißt, sie erweitern sich konisch von der hinter der Zeichenebene von Figur 2 liegenden Stirnfläche der feststehenden Steuerscheibe 1 zu dem in der Zeichenebene liegenden polierten Bereich 3.

Die in Figur 2 links liegende Durchtrittsöffnung 4 der feststehenden Steuerscheibe 1 kommuniziert mit dem Kaltwasseranschluß des sanitären Mischventils; die in Figur 2 rechts liegende Durchtrittsöffnung 5 kommuniziert in entsprechender Weise mit dem Warmwasser-Anschluß.

Die feststehende Steuerscheibe 1 enthält außerdem eine symmetrisch zur Mittelebene M-M geformte dritte Durchtrittsöffnung 6, welche mit dem Auslauf des sanitären Mischventils in Verbindung steht.

Die feststehende Steuerscheibe 1, wie sie in Figur 2 dargestellt ist, zeigt an ihrem Außenumfang außerdem drei Rücksprünge 7, 8, 9, welche der unverdrehbaren Befestigung im nicht dargestellten Kartuschengehäuse dienen.

Figur 1 zeigt die Draufsicht auf die bewegliche Steuerscheibe 2, die mit der feststehenden Steuerscheibe 1 von Figur 2 zusammenwirkt. In ihr ist eine einzige, verhältnismäßig großflächige Durchtrittsöffnung 10 ausgebildet, auf deren Besonderheiten weiter unten eingegangen wird.

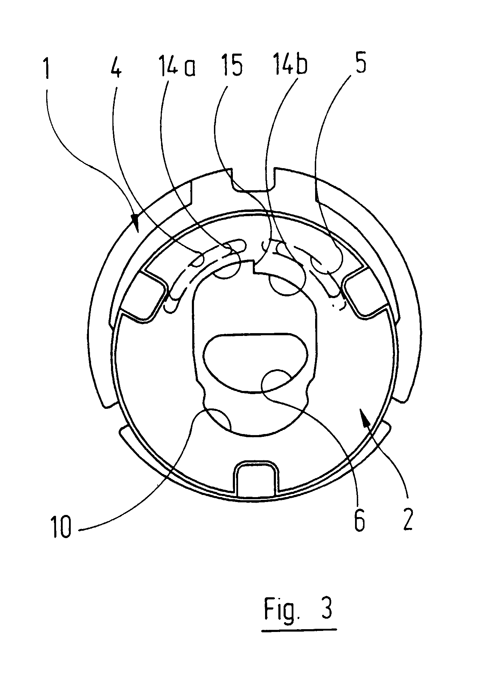

Auch die bewegliche Steuerscheibe 2 ist aus keramischem oder ähnlich hartem Material hergestellt. Sie weist an der hinter der Zeichenebene von Figur 1 liegenden Stirnfläche zumindest einen polierten Bereich auf, der in der Montagestellung der Steuerscheiben 1, 2, wie sie in den Figuren 3 bis 5 dargestellt ist, auf dem polierten Bereich 3 der feststehenden Steuerscheibe 1 aufliegt.

Im fertig montierten sanitären Mischventil ist auf die in der Zeichenebene von Figur 1 liegende Stirnfläche der beweglichen Steuerscheibe 2 ein gemeinsam mit dieser bewegbares Kunststoffteil dicht aufgesetzt. Dieses deckt die Durchtrittsöffnung 10 ab und macht diese so zu einem Umlenkkanal, welcher in an und für sich bekannter Weise je nach der Relativstellung der beweglichen Steuerscheibe 2 zur feststehenden Steuerscheibe 1 die Wasserströme zwischen den Durchtrittsöffnungen 4, 5 und 6 der feststehenden Steuerscheibe 1 steuert.

Drei Rücksprünge 11, 12, 13 am Umfang der beweglichen Steuerscheibe 2 dienen der Verbindung mit dem erwähnten Kunststoffteil, das seinerseits über einen mit den erforderlichen Freiheitsgraden versehenen Stellschaft mit dem Bedienungshebel des sanitären Mischventiles in Verbindung steht.

Bei bekannten Mischventilen, die keine Sonderfunktion erfüllten (wie beispielsweise dasjenige, welches in der eingangs erwähnten DE-C-33 10 080 beschrieben ist), war auch die Durchtrittsöffnung 10 der beweglichen Steuerscheibe 2 symmetrisch zu einer Mittelebene dieser Steuerscheibe ausgestaltet. Dies galt insbesondere für die in Öffnungsrichtung voreilende Steuerkante der bekannten Umlenkkanäle. Hierdurch sollte erreicht werden, daß die Steuerung von Kalt- und Warmwasser ebenfalls symmetrisch erfolgt, daß also insbesondere in der mittleren Drehstellung der beweglichen Steuerscheibe beim Öffnen des Ventiles Kalt- und Warmwasser in gleichem Maße freigegeben wurde.

In diesem Punkte unterscheidet sich das hier beschriebene sanitäre Mischventil und insbesondere die Steuerkante der Durchtrittsöffnung 10 der beweglichen Steuerscheibe 2, die in der Zeichnung mit dem Bezugszeichen 14 versehen ist. Wie insbesondere der Figur 1 zu entnehmen ist, ist diese Steuerkante in zwei Bereiche 14a, 14b unterteilt, die durch eine Stufe 15 voneinander getrennt sind. Die Stufe 15 liegt dabei in derjenigen Mittelebene der beweglichen Steuerscheibe 2, die bei konventioneller Ausgestaltung ihre Symmetrieebene wäre.

Beide Bereiche 14a, 14b sind als Kreisbögen ausgestaltet, deren Radius dem Radius der inneren azimutalen Begrenzungslinie der Durchtrittsöffnungen 4 und 5 der beweglichen Steuerscheibe 1 von Figur 2 entspricht. Die Höhe der Stufe 15, die zwischen den Bereichen 14a, 14b der Steuerkante 14 der beweglichen Steuerscheibe 2 liegt, ist gleich der Breite der Durchtrittsöffnungen 4 und 5 der feststehenden Steuerscheibe 1 von Figur 2.

Welchen Einfluß die geschilderte Ausgestaltung der Steuerkante 14 an der beweglichen Steuerscheibe 2 auf die Wasserflüsse hat, wird nachfolgend anhand der Figuren 3 bis 5 deutlich.

In Figur 3 ist die Schließstellung des sanitären Mischventiles dargestellt, wie sie normalerweise bewußt oder konstruktiv geführt eingenommen wird. In dieser befindet sich die bewegliche Steuerscheibe 2 in der mittleren Drehstellung, in welcher die Stufe 15 in der Durchtrittsöffnung 10 der beweglichen Steuerscheibe 2 mit der Mittelebene M-M der feststehenden Steuerscheibe 1 fluchtet. Die Bereiche 14a und 14b der Steuerkante 14 der beweglichen Steuerscheibe 2 befinden sich radial innerhalb der Durchtrittsöffnungen 4 und 5 der feststehenden Steuerscheibe 1, so daß also die Durchtrittsöffnung 10 der beweglichen Steuerscheibe 2 keine der Durchtrittsöffnungen 4 und 5 der feststehenden Steuerscheibe 1 überlappt. Die mit dem Auslauf des sanitären Mischventils verbundene Durchtrittsöffnung 6 der feststehenden Steuerscheibe 1 befindet sich vollständig innerhalb der Durchtrittsöffnung 10 der beweglichen Steuerscheibe 2.

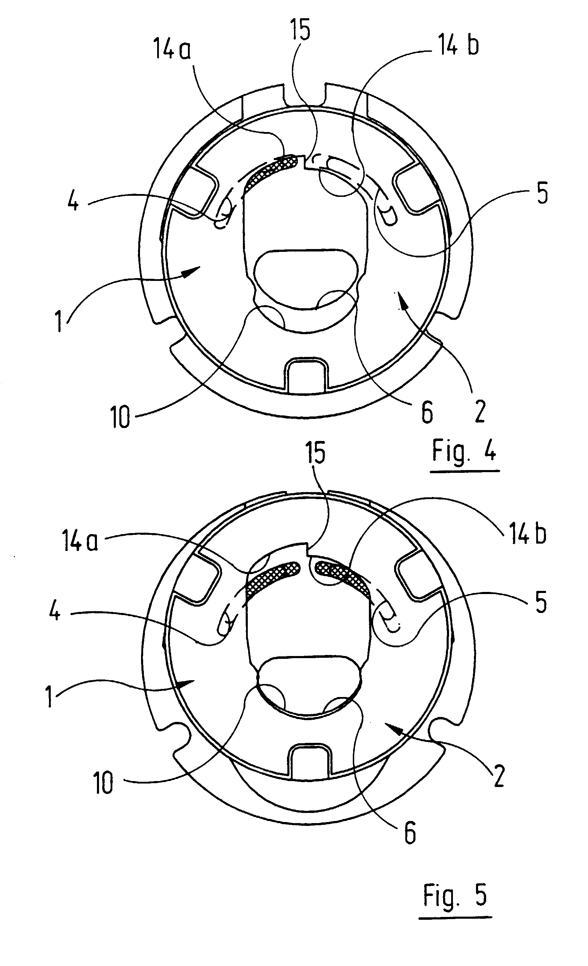

Üblicherweise wird das sanitäre Mischventil - wiederum entweder unbewußt oder geführt durch die Konstruktion - ausgehend von der in Figur 3 dargestellten Schließrichtung dadurch geöffnet, daß die bewegliche Steuerscheibe 2 linear in einer Richtung geführt wird, welche parallel zur Mittelebene M-M der feststehenden Steuerscheibe 1 von Figur 2 verläuft. Geschieht dies, so tritt zunächst eine Relativstellung der beiden Steuerscheiben 1, 2 ein, wie sie in Figur 4 dargestellt ist: Der in der Zeichnung linke Bereich 14a der Steuerkante an der Durchtrittsöffnung 10 der beweglichen Steuerscheibe 2, welcher in Öffnungsrichtung dem Bereich 14b der Steuerkante vorauseilt, wandert über die Durchtrittsöffnung 4 der feststehenden Steuerscheibe 1 hinweg. Hierdurch wird - in Figur 4 gekreuzt schraffiert - eine Überlappungszone zwischen der Durchtrittsöffnung 4 der feststehenden Steuerscheibe 1 und der Durchtrittsöffnung 10 der beweglichen Steuerscheibe 2 hergestellt. Aufgrund der Stufe 15 zwischen den Bereichen 14a und 14b der Steuerkante 14 bleibt jedoch die Durchtrittsöffnung 5 der feststehenden Steuerscheibe 1 noch vollständig geschlossen. Dies hat zur Folge, daß in dem in Figur 4 dargestellten Öffnungszustand des sanitären Mischventiles zunächst ausschließlich Kaltwasser von der Durchtrittsöffnung 4 der feststehenden Steuerscheibe 1 über die Durchtrittsöffnung 10 der beweglichen Steuerscheibe 2 zur Durchtrittsöffnung 6 der feststehenden Steuerscheibe 1 und von dort zum Auslauf fließt. Erst bei einer weiteren Verschiebung der beweglichen Steuerscheibe 2 parallel zur Mittelebene M-M der feststehenden Steuerscheibe 1 wandert auch der in der Zeichnung rechts liegende Bereich 14b der Steuerkante 14 über die Durchtrittsöffnung 5 in der feststehenden Steuerscheibe 1 hinweg. Hierdurch wird nunmehr auch zwischen dieser Durchtrittsöffnung 5 und der Durchtrittsöffnung 10 der beweglichen Steuerscheibe 2 eine Überlappungszone geschaffen, die in Figur 5, rechte Hälfte, gekreuzt schraffiert ist. Entsprechend beginnt jetzt auch Warmwasser von der Durchtrittsöffnung 5 der feststehenden Steuerscheibe 1 über die Durchtrittsöffnung 10 der beweglichen Steuerscheibe 2 zur Durchtrittsöffnung 6 der feststehenden Steuerscheibe 1 und von dort zum Auslauf des sanitären Mischventiles zu fließen. In Figur 5 ist diejenige Position der beweglichen Steuerscheibe 2 dargestellt, in welcher beide Durchtrittsöffnungen 4, 5 im wesentlichen vollständig freigegeben sind, in welcher also ein Zustand erreicht ist, der von der Stufe 15 in der Steuerkante 14 nicht mehr beeinflußt ist und sich so ebenfalls bei bekannten Ventilen findet.

Welche Verhältnisse sich bei der Verdrehung der beweglichen Steuerscheibe 2 aus der in Figur 5 dargestellten, mittleren Stellung ergeben, ist offenkundig: Wie dies auch bei bekannten sanitären Mischventilen geschieht, wird bei einer Verdrehung der beweglichen Steuerscheibe 2 im Uhrzeigersinn die mit dem Warmwasserzulauf verbundene Durchtrittsöffnung 5 der feststehenden Steuerscheibe 1 auf Kosten der mit dem Kaltwasser-Zulauf verbundenen Durchtrittsöffnung 4 weiter freigegeben, so daß sich in dem über die Durchtrittsöffnung 6 auslaufenden Mischwasser ein höherer Anteil an Warmwasser befindet. Eine Verdrehung der beweglichen Steuerscheibe 2 gegen den Uhrzeigersinn bewirkt das Gegenteil.

Auch in der anfänglichen Öffnungsstellung des sanitären Mischventiles, die in Figur 4 dargestellt ist, läßt sich selbstverständlich die Temperatur des auslaufenden Wassers verändern. Wird nämlich die bewegliche Steuerscheibe 2 wiederum im Uhrzeigersinn verdreht, so beginnt nunmehr die Stufe 15, die zwischen den Bereichen 14a und 14b der Steuerkante 14 liegt, über die Durchtrittsöffnung 5 der feststehenden Steuerscheibe 1 wegzuwandern, so daß nunmehr "von der Seite her" eine Überlappung zwischen der Durchtrittsöffnung 10 der beweglichen Steuerscheibe 2 und der Warmwasser führenden Durchtrittsöffnung 5 der feststehenden Steuerscheibe 1 hergestellt wird.

Dem Benutzer werden die Besonderheiten, welche das oben beschriebene sanitäre Mischventil und insbesondere deren bewegliche Steuerscheibe 2 aufweisen, nicht bewußt. Er kann in jedem Stadium des Öffnens die Temperatur des ausfließenden Wassers nach seinen Wünschen verändern. In vielen Fällen genügt ihm aber das kalte Wasser, welches beim normalen Öffnen aus der Schließstellung in die in Figur 4 dargestellte Position zunächst austritt, für seine Zwecke, z.B. zum Händewaschen, vollständig, so daß er auf eine Verdrehung der beweglichen Steuerscheibe und damit den Austritt von Warmwasser verzichtet. Bei bekannten Ventilen wäre hier Mischwasser ausgetreten, ohne daß dies für den Komfort des Benutzers erforderlich gewesen wäre. Die in zwei gegeneinander versetzte Bereiche 14a, 14b unterteilte Steuerkante 14 der beweglichen Steuerscheibe 2 bietet also dem Benutzer immer zunächst rein kaltes Wasser an, um ihm so die Möglichkeit zu geben, sich damit zu begnügen. In allen Fällen, in denen dies geschieht, wird Energie eingespart.

## Patentansprüche

1. Sanitäres Mischventil mit
a) einer feststehenden Steuerscheibe (1), welche eine erste mit einem Kaltwasser-Zulauf kommunizierende Durchtrittsöffnung (4) und symmetrisch zu einer Mittelebene eine zweite mit einem Warmwasser-Zulauf kommunizierende Durchtrittsöffnung (5) aufweist;
b) einer zweiten, auf der feststehenden Steuerscheibe (1) aufliegenden beweglichen Steuerscheibe (2), welche gegenüber der feststehenden Steuerscheibe (1) zur Veränderung der Menge des auslaufenden Wassers linear verschiebbar und zur Veränderung der Temperatur verdrehbar ist und hierzu eine Ausnehmung (10) aufweist, welche in Verbindung mit einem Auslauf steht und in unterschiedliche Überlappung mit den beiden Durchtrittsöffnungen (4,5) der feststehenden Steuerscheibe (1) gebracht werden kann,
wobei
c) an der in Öffnungsrichtung vorauseilenden Begrenzungslinie der Ausnehmung (10) der beweglichen Steuerscheibe (2) eine Steuerkante (14) ausgebildet ist, die so geformt ist, daß die bewegliche Steuerscheibe (2) in ihrer mittleren Drehstellung beim Öffnen die beiden Durchtrittsöffnungen (4,5) der feststehenden Steuerscheibe (1) in unterschiedlicher Weise freigibt,
dadurch gekennzeichnet, daß
d) die Steuerkante (14) an der Ausnehmung (10) der beweglichen Steuerscheibe (2) so geformt ist, daß beim öffnen des Ventils in der mittleren Drehstellung der beweglichen Steuerscheibe (2) zunächst ausschließlich die mit dem Kaltwasser-Zulauf kommunizierende Durchtrittsöffnung (4) der feststehenden Steuerscheibe (1) und erst bei fortschreitender linearer Verschiebung der beweglichen Steuerscheibe (2) auch die mit dem Warmwasser-Zulauf kommunizierende Durchtrittsöffnung (5) der feststehenden Steuerscheibe (1) freigegeben wird.

2. Sanitäres Mischventil nach Anspruch 1, dadurch gekennzeichnet, daß die Steuerkante (14) in zwei Bereiche (14a, 14b) unterteilt ist, die über eine Stufe (15) miteinander verbunden sind.

3. Sanitäres Mischventil nach Anspruch 2, bei welchem die Durchtrittsöffnungen der feststehenden Steuerscheibe als Kreisringsegmente ausgebildet sind, dadurch gekennzeichnet, daß die beiden Bereiche (14a, 14 b) der Steuerkante (14) als Kreisbögen ausgestaltet sind, deren Radius mit dem Radius der radial inneren Begrenzungslinien der Durchtrittsöffnungen (4, 5) der feststehenden Steuerscheibe (1) übereinstimmt.

4. Sanitäres Mischventil nach Anspruch 2 oder 3, dadurch gekennzeichnet, daß die Stufe (15) in der mittleren Drehstellung der beweglichen Steuerscheibe (2) mit der Mittelebene (M-M) der feststehenden Steuerscheibe (1) fluchtet.

5. Sanitäres Mischventil nach einem der Ansprüche 2 bis 4, dadurch gekennzeichnet, daß die Höhe der Stufe (15) gleich der Breite der Durchtrittsöffnungen (4, 5) der beweglichen Steuerscheibe (1) ist.

## Claims

1. Sanitary mixer valve, comprising
a) a fixed plate cam (1) which has a first opening (4) connecting with a cold water supply and, symmetrical to a median plane, a second opening (5) connecting to a hot water supply;
b) a second, moving plate cam (2) which is supported on the fixed plate cam (1) and which can be moved linearly relative to the fixed plate cam (1) to change the volume of water emerging and can be turned to change the temperature and, for this purpose, has a recess (10) which is connected to an outlet and can be moved to overlap the two openings (4, 5) in the fixed plate cam to varying degrees,
whereby
c) there is formed on the leading boundary line of the recess (10) in the moving plate cam (2) in the direction of opening a guiding edge (14) which is designed so that, in its central position of rotation during the valve opening process, the moving plate cam (2) uncovers the two openings (4, 5) in the fixed plate cam (1) in different ways,
characterized in that
d) the guiding edge (14) on the recess (10) in the moving plate cam (2) is designed so that to begin with, when the valve is being opened, in the central position of rotation of the moving plate cam (2), only the opening (4) in the fixed plate cam (1) which connects with the cold water supply is uncovered and it is only when the moving plate cam (2) continues to move linearly that the opening (5) in the fixed plate cam (1) which connects with the hot water supply is uncovered.

2. Sanitary mixer valve according to Claim 1, characterized in that the guiding edge (14) is divided into two areas (14a, 14b) which are joined together by means of a step.

3. Sanitary mixer valve according to Claim 2, in which the openings in the fixed plate cam are designed in the form of ring segments, characterized in that the two areas (14a, 14b) of the guiding edge (14) are designed in the form of circular arcs, the radius of which matches the radius of the radial inner boundary lines of the openings (4, 5) in the fixed plate cam (1).

4. Sanitary mixer valve according to Claim 2 or 3, characterized in that, in the central position of rotation of the moving plate cam (2), the step (15) aligns with the median plane (M-M) of the fixed cam plate (1).

5. Sanitary mixer valve according to one of the Claims 2 to 4, characterized in that the height of the step (15) is equal to the width of the openings (4, 5) in the moving plate cam (1).

## Revendications

1. Mitigeur sanitaire, comprenant :
a) un disque de commande fixe (1) qui présente une première ouverture de passage (4) communiquant avec une arrivée d'eau froide et, symétriquement par rapport à un plan central, une deuxième ouverture de passage (5) communiquant avec une arrivée d'eau chaude ;
b) un deuxième disque de commande (2) qui est mobile, qui porte sur le disque de commande fixe (1), qui peut être déplacé en translation par rapport au disque de commande fixe (1) pour modifier le débit de l'eau à la sortie, que l'on peut faire tourner pour modifier la température et qui présente à cette fin un évidement (10), lequel communique avec une sortie et peut être amené à recouvrir différemment les deux ouvertures de passage (4, 5) du disque de commande fixe (1),
dans lequel :
c) sur la ligne de délimitation de l'évidement (10) du disque de commande mobile (2) qui est à l'avant dans la direction de l'ouverture est ménagé un bord de commande (14) conformé d'une manière telle que le disque de commande mobile (2) libère d'une manière différente les deux ouvertures de passage (4, 5) du disque de commande fixe (1) dans sa position centrale en rotation lors de l'ouverture,
caractérisé par le fait que :
d) le bord de commande (14) ménagé sur l'évidement (10) du disque de commande mobile (2) est conformé d'une manière telle que, lors de l'ouverture du robinet lorsque le disque de commande mobile (2) est dans sa position centrale en rotation, ce soit tout d'abord exclusivement l'ouverture de passage (4) du disque de commande fixe (1) qui communique avec l'arrivée d'eau froide que l'on libère, et que ce soit seulement lors de la poursuite du déplacement en translation du disque de commande mobile (2) que l'ouverture de passage (5) du disque de commande fixe (1) qui communique avec l'arrivée d'eau chaude est également libérée.

2. Mitigeur sanitaire selon la revendication 1, caractérisé par le fait que le bord de commande (14) est divisé en deux parties (14a, 14b) qui sont reliées entre elles par l'intermédiaire d'un gradin (15).

3. Mitigeur sanitaire selon la revendication 2, dans lequel les ouvertures de passage du disque de commande fixe sont réalisées sous la forme d'arcs de cercle, caractérisé par le fait que les deux parties (14a, 14b) du bord de commande (14) se présentent sous la forme d'arcs de cercle dont le rayon coïncide avec le rayon des lignes de délimitation des ouvertures de passage (4, 5) du disque de commande fixe (1) qui sont à l'intérieur dans le sens radial.

4. Mitigeur sanitaire selon la revendication 2 ou 3, caractérisé par le fait que le gradin (15) est aligné sur le plan central (M-M) du disque de commande fixe (1) lorsque le disque de commande mobile (2) est dans sa position centrale en rotation.

5. Mitigeur sanitaire selon l'une des revendications 2 à 4, caractérisé par le fait que la hauteur du gradin (15) est égale à la largeur des ouvertures de passage (4, 5) du disque de commande fixe (1).
